# EUROPÄISCHE PATENTSCHRIFT

(11) **EP 1 336 058 B1**
(45) Veröffentlichungstag und Bekanntmachung des Hinweises auf die Patenterteilung: **05.01.2005**
(21) Anmeldenummer: 02779298.5
(22) Anmeldetag: 03.09.2002
(51) Int. Cl.: F16H 7/08

(54) **KETTENSPANNER MIT MECHANISCHER VERRIEGELUNG**
CHAIN-TENSIONER WITH MECHANICAL LOCKING
TENDEUR DE CHAINE A VERROUILLAGE MECANIQUE

(30) Priorität: 27.11.2001 DE 20119200 U
(43) Veröffentlichungstag der Anmeldung: 20.08.2003
(73) Patentinhaber: JOH. WINKLHOFER & SÖHNE GmbH & Co KG, D-81369 München (DE)
(72) Erfinder: HELLMICH, Wolfram, 81829 München (DE); HIRSCHMANN, Volker, 82256 Fürstenfeldbruck (DE)
(74) Vertreter: Grünecker, Kinkeldey, Stockmair & Schwanhäusser Anwaltssozietät
(86) Internationale Anmeldenummer: PCT/EP2002/009849
(87) Internationale Veröffentlichungsnummer: WO 2003/046411

(56) Entgegenhaltungen:
- EP-A- 0 657 662
- WO-A-00/61969
- DE-A- 3 741 860
- PATENT ABSTRACTS OF JAPAN vol. 017, no. 392 (M-1450), 22. Juli 1993 (1993-07-22) -& JP 05 071603 A (DAIDO KOGYO CO LTD), 23. März 1993 (1993-03-23)

## Beschreibung

Die vorliegende Erfindung betrifft eine Spannvorrichtung für Endlostreibelemente, wie Ketten, Riemen etc., mit einem Spannkolben, der eine Rasteinrichtung aufweist und mit einem Rastkolben, der mit der Rasteinrichtung zum Arretieren oder Freigeben der Bewegung des Spannkolbens in oder außer Eingriff bringbar ausgestaltet ist.

Eine solche Spannvorrichtung ist z.B. aus der EP 0 657 662 A 2 bekannt. Diese umfasst einen Spannkolben, der an seinem Außenumfang mehrere Rastnuten aufweist, in die ein federbelasteter Rastkolben eingreift. Die Vorderfläche des Rastkolbens ist angeschrägt und kann mit einem Öldruck beaufschlagt werden, damit dieser außer Eingriff gebracht wird. Die Rasteinrichtung sorgt dafür, dass bei Abschalten der Motorölhydraulik eine Rastwirkung eintritt und der Spannkolben nicht mehr einfedern kann. Hierdurch wird eine bestimmte Vorspannung auch während des Motorstillstandes trotz eventueller Ölleckage aus dem Druckraum aufrechterhalten. Beim Motorstart ist daher eine vorgegebene Spannung unabhängig von der Motorölhydraulik vorhanden. Sobald sich ein ausreichender Druck aufgebaut hat, kommt die Rastvorrichtung außer Eingriff und der Spannkolben arbeitet in herkömmlicher Weise.

Eine ähnliche Spannvorrichtung ist auch aus der DE 195 48 923 A1 bekannt. Des weiteren sind herkömmliche Rastvorrichtungen an Kettenspanner und ähnlichen vorgesehen, die jedoch lediglich einer Nachstellung dienen und den Einfederweg des Spannkolbens auf einen vorgegebenen Wert beschränken. Solche Konstruktionen dienen der Verschleißnachführung. Nachteilig bei den an dem Motorhydraulik angeschlossenen Rastvorrichtungen ist die Tatsache, dass diese den Schwankungen des Hydraulikdrucks sowie einem eventuellen Druckaufbau im Spannkolbenbereich ausgesetzt sind. Bei den herkömmlichen Rastvorrichtungen erfolgt das Zurückdrücken des Rastkolbens durch die Verzahnung am Spannkolben gegen eine Federkraft, weshalb sich ein Verschleiß einstellt.

Aus JP-A-5-071603 ist eine Spannvorrichtung bekannt die die vorkennzeichnenden Merkmale des Anspruchs 1 offenbart.

Es ist daher die Aufgabe der vorliegenden Erfindung, eine Spannvorrichtung der Eingangs genannten Art konstruktiv zu verbessern.

Diese Aufgabe wird erfindungsgemäß dadurch gelöst, dass der Rastbereich des Rastkolbens eine Ausgestaltung aufweisen, die einen hydraulischen Kraftausgleich bewirkt. Eine solche Ausgestaltung lässt es zu, dass der Rastbereich des Rastkolbens zwar einem Druckmedium ausgesetzt wird; jedoch dieses im wesentlichen keine Kraftkomponente am Rastbereich zur Be-tätigung des Rastkolbens bewirkt. Der Fachmann weiß, dass er hierzu Kräfte in entgegengesetzter Richtung wirken lassen muss, damit diese sich gegenseitig aufheben (bezüglich der Betätigung). Eine solche Spannvorrichtung könnte daher durchaus im Druckraum des Spannkolbens angeordnet werden, wobei ein Aufschaukeln des Druckes im Druckraum keinen Einfluss auf die Betätigung des Rastkolbens sowohl in die Arretier- als auch in die Freigabestellung hat. Solche Druckaufschaukelungen haben bei bisher verwendeten Vorrichtungen mit angesteuerten Rastvorrichtungen immer verhindert, dass der Rastkolben, z.B. nach Abschalten der Motorhydraulik sofort in seine Arretierstellung gelangt. Erst nach einigem Druckabbau durch Leckage an dem Rastbereich des Rastkolbens erfolgte dann die Verrastung. Eine solche Zeitverzögerung ist durch die gewählte Ausgestaltung verhindert.

Günstigerweise kann der Betätigungsbereich des Rastkolbens eine mit einem Betätigungsdruck einer Hydraulikflüssigkeit beaufschlagbare Kolbenfläche aufweisen, deren Betätigungsrichtung in die Freigabestellung des Rastkolbens weist. Durch diese Maßnahme wird durch Aufbringen eines Hydraulikdrucks der Rastkolben in eine Freigabestellung verschoben. Eine solche Konstruktion könnte bei Verbrennungsmotoren eingesetzt und an der Motorhydraulik angeschlossen werden.

Bevorzugt kann eine auf den Betätigungsbereich des Rastkolbens wirkende Federeinrichtung vorgesehen sein, deren Wirkrichtung in die Arretierstellung des Rastkolbens weist. Diese Maßnahme bewirkt, dass der Rastkolben durch die Federkraft der Federeinrichtung vorrangig in die Arretierstellung gedrückt wird. Das bedeutet, dass eine Betätigungskraft in der entgegengesetzte Richtung immer größer sein muss, um eine Entriegelung zu bewirken.

Vorteilhafterweise kann der Rastbereich als Rastöffnung in einem sich von dem Betätigungsbereich weg erstreckenden Raststößel angeordnet sein, durch die sich die Rasteinrichtung des Spannkolbens zumindest bereichsweise erstreckt. Die Rastöffnung sorgt dafür, dass ein Druckmedium in ihrem Inneren Kraftkomponenten über die gesamte Oberfläche der Öffnung erzeugt und sich die Kräfte derart aufheben, dass die Betätigung des Rastkolbens nicht unterstützt wird. Dies ist eine einfache konstruktive Maßnahme den Rastbereich unbeeinflusst von Druckkräften auszugestalten.

Darüber hinaus könnte die Rastöffnung eine einseitig an der Innenfläche angeordnete Rastnase für den Eingriff in die Rasteinrichtung des Spannkolbens aufweisen. Eine solche Rastnase an der Innenseite wirkt sich nicht auf die Kräfteverhältnisse in Betätigungsrichtung des Rastkolbens aus und sorgt dennoch für einen sicheren Eingriff in die Rasteinrichtung des Spannkolbens.

In einer Variante kann die Rasteinrichtung des Spannkolbens eine durch die Rastöffnung des Rastkolbens erstreckende Raststange mit einer Verzahnung umfassen. Die Betätigungswege des Spannkolbens und des Rastkolbens kreuzen sich demnach und einzelne Bauteile der beiden Kolben greifen ineinander. Hierdurch ist eine sehr kompakte und sehr robuste Ausführung gegeben.

Die Raststange kann einen kreisförmigen Grundquerschnitt aufweisen, wobei die Rastöffnung im Raststößel als ein an diesen Grundquerschnitt angepasstes Langloch ausgestaltet ist. Diese Länge (in Längsachse des Raststößels gesehen) des Langloches kann dann mindestens dem Betätigungshub des Rastkolbens zwischen Freigabestellung und Arretierstellung entsprechen. Das bedeutet, dass sich die Raststange und der die Rastöffnung bereitstellende Teil des Rastkolbens auch gegenseitig führen können, da das Spiel gerade so gewählt werden muss, dass eine ungestörte Verschiebung der Raststange in dem Langloch in der Freigabestellung ermöglicht ist. Bei einer solchen Variante kann die Raststange auch als Fortsatz des eigentlichen Spannkolbens mit geringerem Durchmesser ausgestaltet sein. Es sind jedoch auch andere Querschnitte an Stelle des kreisförmigen Querschnittes möglich.

Wenn die Rastöffnung gemäß einer Variante einseitig an der Innenfläche einen Hinterschnitt aufweist, der in die Rastnase übergeht, dann stellt die Rastöffnung auch in der Arretierstellung eine Anlageschulter bereit, die sich an die Raststange anschmiegen kann. Bei Ausführungen des Rastkolbens als Kunststoffvariante oder in Gusstechnik sorgt dieser Hinterschnitt auch für verminderte Materialanhäufung.

Bei einer Ausführungsform ist der Spannkolben in einem Gehäuse geführt, zwischen dem Gehäuse und dem Spannkolben eine Druckkammer ausgebildet, die Rasteinrichtung aus der Druckkammer herausgeführt und die Verzahnung befindet sich bei vollständig eingefahrenem Spannkolben außerhalb der Druckkammer. Hierin ist eine zusätzliche Maßnahme zur Verlagerung des Rastbereiches des Rastkolbens, aus dem Druckbereich eines fluidbetriebenen Spannkolbens heraus, zu sehen. Je nach Ausgestaltung des Gehäuses ist dann der Rastbereich lediglich einem Leckagestrom des Fluids ausgesetzt. Schwingungszustände, die sich im Druckmedium während des Betriebs der Spanneinrichtung ergeben, wirken sich daher nicht auf den Rastkolben aus.

Bevorzugt kann der Rastkolben in einem Gehäuse getrennt von einer Druckkammer des Spannkolbens geführt sein. Die beiden Kolben könnten auch in einem gemeinsamen Gehäuse angeordnet werden, wobei sich lediglich die Rasteinrichtung und der Rastbereich kreuzen und miteinander in Eingriff bringbar sind.

In einer weiteren Ausführungsform der Spanneinrichtung für einen Verbrennungsmotor mit Motorölkreislauf kann die Kolbenfläche des Rastkolbens von dem Hydraulikdrucks des Motorölkreislaufes beaufschlagt sein. Hierbei kann durch eine vorteilhaft gewählte Zuführung sichergestellt werden, dass hydraulische Schwingungen, wie sie im Bereich der Druckkammer des Spannkolbens auftreten, möglichst weitgehend von der Betätigung des Rastkolbens entkoppelt sind. Im einfachsten Falle erfolgt diese Abgrenzung über eine Rückschlagventil.

Im folgenden wird einer Ausführungsform der vorliegenden Erfindung anhand einer Zeichnung näher erläutert. Es zeigen:
- Figur 1: einen hydraulischen Kettenspanner gemäß der vorliegenden Erfindung im Vollschnitt,
- Figur 2: den Kettenspanner aus Figur 1 entlang der Linie II - II geschnitten und
- Figur 3: den Kettenspanner aus Figur 1 entlang der Linie III-III geschnitten.

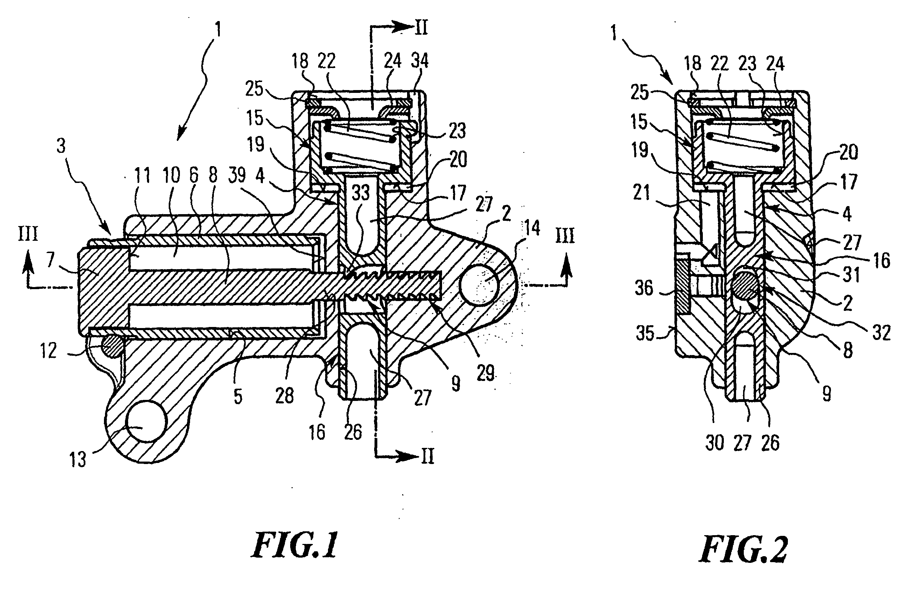

Der in Figuren 1 bis 3 dargestellte Kettenspanner 1 ist mit einer Rastfunktion, insbesondere beim Abschalten des Hydraulikkreislaufes, ausgestattet.

Der Kettenspanner 1 umfasst im wesentlichen ein Gussgehäuse 2, z.B. aus einem Aluminiumdruckguss, einen in dem Gehäuse axial geführten Spannkolben 3 und einen senkrecht zum Spannkolben 3 in dem Gehäuse 2 geführten Rastkolben 4. Der Spannkolben 3 ist in einer zylindrischen Bohrung 5 im Gehäuse 2 geführt und umfasst eine zylindrische Führungshülse 6 und einen in diese eingepressten Kolbenkopf 7, z.B. aus einem geeigneten Kunststoffmaterial. Die Führungshülse 6 ist bevorzugt aus Stahl hergestellt. Über einen Bereich stützt sich der Kolbenkopf 7 an der Stirnfläche der Führungshülse 6 ab, so dass sichergestellt ist, dass ein Endlostreibelement, z.B. eine Kette, oder der Spannbereich einer Spannschiene nur mit dem Kolbenkopf 7 in Berührung kommt. Im Inneren der Führungshülse 6 geht der Kolbenkopf 7 in eine zylindrische Raststange 8 über, die an ihrem freien Ende als Rasteinrichtung eine Rastverzahnung 9 aufweist. Die Rastverzahnung ist als umlaufende Ringnut mit dreieckförmigen Querschnitt ausgestaltet, so dass ein Sägezahnprofil im Querschnitt entsteht. Die Richtung der Sägezahnprofilierung ist so gewählt, dass ein Ausfahren des Spannkolbens 3, aber nicht ein Einfahren, blockiert werden kann. Zwischen dem Kolbenkopf 7 und der Raststange 8 ist in ihrem mittleren Bereich ein hohlzylindrischer Ringraum 10 vorgesehen, in dem eine Schraubendruckfeder (nicht dargestellt) angeordnet ist. Die Druckfeder stützt sich an der Rückseite 11 des Kolbenkopfes 7 und an dem Grund 39 der Bohrung 5 ab.

Der Kettenspanner 1 ist in einer Transportstellung dargestellt. In dieser ist der Spannkolben 3 vollständig eingefahren und durch einen Sicherungsstift 12 arretiert. Die nicht dargestellte Druckfeder im Ringraum 10 ist dabei in ihrem maximalen Spannzustand zusammengedrückt. Nach dem Einbau des Kettenspanners 1 und der zu Hilfenahme der Befestigungshülsen 13 und 14 am Gehäuse 2, wird der Sicherungsstift 12 entfernt und somit die Transportstellung gelöst. Der Spannkolben 3 spannt sich dann gegen z.B. den Auflagebereich einer Spannschiene, die wiederum gegen eine Kette gedrückt ist.

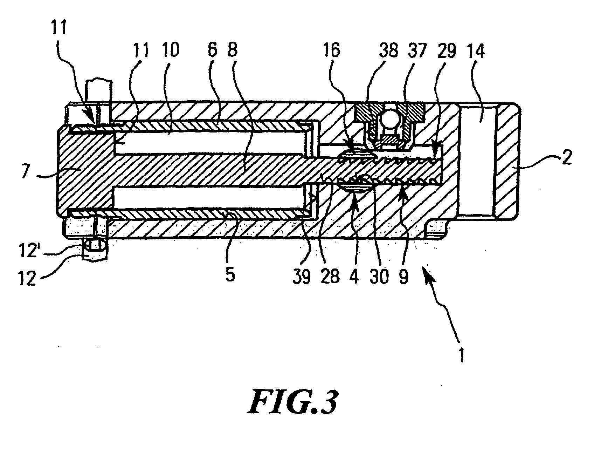

Aus der Schnittdarstellung der Figuren 3 ist zu erkennen, dass der Ringraum 10 und der sich unterhalb des Spannkolbens 3 erstreckende Freiraum der Bohrung 5 über einen Hydraulikkanal 37 im Gehäuse 2 mit der Motorölhydraulik eines Verbrennungsmotors, an dem der Kettenspanner 1 befestigt ist, in Verbindung stehen können. Das bedeutet, dass Motoröl über ein Rückschlagventil 36 in diesen Druckraum einfließen kann. Über das seitlich in einer Bohrung 38 des Gehäuses eingepressten Rückschlagventil 36 strömt die Hydraulikflüssigkeit in den Hydraulikkanal 37 ein. Dieser Hydraulikkanal erstreckt sich parallel zur Rastverzahnung 9 und parallel zur Grundbohrung 29. In diesem Hydraulikkanal 37 erstreckt sich auch ein Raststößel 16, so dass sowohl der Raststößel 16 als auch die Rastverzahnung 9 an der Raststange 8 dem Hydraulikdruck ausgesetzt sind. Durch den versetzten Schnitt entlang der Linie II - II ist in Figur 2 das Rückschlagventil 36 nur teilweise geschnitten dargestellt. Im Betriebszustand wird dann die Spannfunktion hauptsächlich durch diesen Hydraulikdruck aufgebracht, dessen Kraftwirkung die Spannkraft der Feder übersteigt. Hierdurch ist die Hydraulikflüssigkeit in dem Druckraum den Schwingungen des Spannkolbens 3 ausgesetzt und eine Entlastung erfolgt nur durch Leckageströme. Bei ansteigendem Motorölhydrautikdruck steigt auch die Spannkraft des Spannkolbens 3 an.

Der senkrecht zum Spannkolben 3 im Gehäuse 2 verschiebbare Rastkolben 4 weist einen zylindrischen Betätigungsabschnitt 15 und einen daran angeordneten Raststößel 16 auf. Dabei kreuzt lediglich der Raststößel 16 die Raststange 8 des Spannkolbens 3. Der Betätigungsabschnitt 15 ist mit einer ringförmigen Kolbenfläche 17 ausgeführt. Des weiteren ist der Betätigungsabschnitt 15 axial verschiebbar in einer zylindrischen Bohrung 18 geführt. Zwischen der Kolbenfläche 17 und der Grundfläche 19 des Betätigungsabschnittes befindet sich ein Druckraum 20, der über einen Versorgungskanal 21 mit der Motorölhydraulik in Verbindung steht. Ein Druckaufbau in dem Druckraum 20 sorgt demnach dafür, dass sich der Rastkolben 4 nach oben (siehe Figur 1) in eine Freigabestellung verschiebt. Im unbelasteten Zustand wird der Rastkolben 4 über eine Druckfeder 22, die in einer hinten offenen Zylinderbohrung 23 des Betätigungsabschnittes 15 angeordnet ist und sich an einer Abstützscheibe 24, die über einen Sicherungsring 25 gesichert ist, abstützt, in eine Arretierstellung nach unten (siehe Figur 1) gedrückt. Die Federkraft ist so ausgelegt, dass sie im Betrieb von dem Druck in der Druckkammer 20 überbrückt wird.

Der Raststößel 16 weist im Querschnitt eine Rundform auf und erstreckt sich in einer Führungsöffnung 26 durch das Gehäuse 2 und steht aus diesem einseitig hervor. Der Raststößel 16 ist darüber hinaus mit Hohlräumen 27 versehen, die auch eine Ausgestaltung in Spritzgusstechnik aus Kunststoff ermöglichen (Vermeidung von Materialanhäufungen).

Die Bohrung 5 für den Spannkolben 3 und die Führungsbohrung 26 für den Raststößel 16 stehen lediglich über eine kleine Verbindungsöffnung 28 die gerade so das Durchschieben des Bereichs mit der Rastverzahnung 9 der Raststange 8 ermöglicht und den Hydraulikkanal 37 in Verbindung. Das freie Ende der Rastverzahnung 9 ist in einer Grundbohrung 29 im Gehäuse aufgenommen und in dieser verschiebbar geführt.

Die Rastverzahnung 9 der Raststange 8 erstreckt sich durch eine Rastöffnung 30 im Raststößel 16. Diese Rastöffnung 30 erstreckt sich senkrecht zur Betätigungsrichtung des Rastkolbens 4. Der Innenumfang der Rastöffnung ist vollständig im Raststößel 16 geschlossen, so dass nur von links oder rechts (siehe Figur 1) in diese eingegriffen werden kann. Des weiteren ist die Rastöffnung 30 im Querschnitt als Langloch ausgestaltet, dass an die Querschnittsform der Rastverzahnung 9 der Raststange 8 angepasst ist. Die Länge des Langloches ist zu gewählt, dass sie größer ist als der Betätigungsweg des Rastkolbens 4. Einseitig ist die Rastöffnung mit einem Hinterschnitt 31 ausgestaltet, der jedoch im Querschnitt so ausgeformt ist, dass die Rastverzahnung 9 der Raststange 8 in der Arretierstellung mit einer Schulter 32 der Rastöffnung zur Anlage kommt, so dass der Hinterschnitt 31 frei bleibt. Teils in den Hinterschnitt 31 teils in die Rastöffnung 30 erstreckt sich auf der einen Seite der Rastöffnung 30 eine Rastnase 33 in diese hinein. Die Rastnase 33 ist an ihrer Stirnfläche bogenförmig ausgestaltet, damit sie fast genau in die Rastverzahnung 9 hineinpasst. Die Rastnase 33 ist so ausgestaltet, dass sie jeweils mit einer ringförmigen Zahnnut der Rastverzahnung 9 in Eingriff bringbar ist. Im Querschnitt ist diese ebenfalls dreiecksförmig ausgestaltet, wobei sie gerundet in den Hinterschnitt 31 übergeht.

Seitlich zur Bohrung 18 ist ein Entlüftungskanal 34 angeordnet, durch den auch ein Leckagestrom aus dem Druckraum 20 entweichen kann.

Im folgenden wird die Wirkungs- und Funktionsweise des Kettenspanners 1 näher erläutert.

Der im Transportzustand dargestellte Kettenspanner 1 wird über die Hülsen 13, 14 an einem Motorblock eines Verbrennungsmotors befestigt. Anschließend wird der Splint 12' und Sicherungsstift 12 entfernt, so dass der Spannkolben 3 durch die Druckfeder beaufschlagt ausfährt. Das Zusammenspiel von der Druckfeder 22 und des Rastkolbens 4 und der Druckfeder (nicht dargestellt) des Spannkolbens 3 ist so gewählt, dass die Rastverzahnung an der Rastnase 33 durchrutscht. Es stellt sich ein Gleichgewicht zwischen dem Spannkolben 3 und dem zu spannenden Medium, insbesondere einer Spannschiene, ein. Über die in geeigneter Weise ausgestaltete Anschlussfläche 35 (seitlich am Gehäuse 2 erfolgt durch die Befestigung über die Ösen 13 und 14 ein automatischer Anschluss an den Hydraulikkreislauf des Verbrennungsmotors. Sowohl der Versorgungskanal 21 für den Rastkolben 4 als auch der Versorgungskanal 37 für den Spannkolben 3 stehen dann mit der Motorölhydraulik in Verbindung. Alternativ zu der Transportsicherung mittels Splint 12' und Sicherungsstift 12 kann das Zusammenspiel der Druckfeder 22 und des Rastkolbens 4 und der Druckfeder (nicht dargestellt) des Spannkolbens 3 so gewählt werden, dass die Rastverzahnung an der Rastnase 33 als Transportsicherung dient. So lange der Rastkolben 4 nicht durch den Motorölhydraulikdruck entriegelt wird, befindet sich demnach der Kettenspanner 1 in einer verrasteten Stellung.

Geht man nun von einem ausgeschalteten Verbrennungsmotor aus, so liegt kein Hydraulikdruck im Spannkolben 3 und einem Rastkolben 4 an. Ein Einfahren des Spannkolbens 3 ist in diesem Zustand durch den Rastkolben 4, der durch die Druckfeder 22 in die Verriegelungsstellung gedrückt ist, verhindert. Das bedeutet, dass beim Motorstart, bevor sich ein geeigneter Hydraulikdruck im Hydraulikkreislauf aufbauen kann, ein Einfahren des Spannkolbens 3 trotz auftretender großer Kräfte am Kolbenkopf 7 verhindert ist. Hierdurch ist beim Motorstart bereits eine vorgegebene Spannung trotz des nicht ausreichenden Hydraulikdruckes immer gegeben. Sobald sich nach dem Motorstart der Hydraulikdruck ausreichend aufgebaut hat, verschiebt sich durch den Druckaufbau im Druckraum 20 der Rastkolben 4 in die Entriegelungsstellung. Der Hydraulikdruck im Druckraum des Spannkolbens 3 ist ebenfalls so erhöht, dass die Spannkraft hauptsächlich über diesen Hydraulikdruck aufgebracht wird. Dieser Hydraulikdruck ist lastabhängig und erhöht sich bei höheren Drehzahlen, wodurch die Spannung dann intensiviert wird. In diesem Zustand kann der Spannkolben 3 in gewohnter Weise, wie bei herkömmlichen hydraulischen Kettenspannern arbeiten. Die Rastverzahnung 9 kann sich frei innerhalb der Rastöffnung 30 bewegen, weil die Rastnase 33 zurückgezogen ist. Durch den Verbindungskanal 37 und die Verbindungsöffnung 28 dringt auch Hydraulikflüssigkeit in die Rastöffnung 30 ein. Durch deren Ausgestaltung als am Umfang geschlossenes Langloch wirkt sich jedoch der Hydraulikdruck nicht auf die Betätigung des Rastkolbens 4 aus. Vielmehr werden Kraftkomponenten sowohl in die Freigabestellung als auch in die Arretierstellung erzeugt, so dass der Hydraulikdruck innerhalb der Rastöffnung 30 keinen Einfluss auf das Betätigungsverhalten des Rastkolbens 4 hat. Auch der Hinterschnitt 31 und die Rastnase 33 wirken sich hierbei nicht in Betätigungsrichtung aus, da es auf die projizierte Fläche senkrecht zur Betätigungsrichtung ankommt. Demnach haben auf die Betätigung des Rastkolbens 4 lediglich die Druckfeder 22 und der Hydraulikdruck im Druckraum 20 Einfluss. Der Druckraum 20 ist jedoch vom Druckraum des Spannkolbens 3 und dessen Druckschwankungen durch Vibrationen und Schwingungen am Entlostreibelement, z.B. der Kette, entkoppelt. Hierdurch wird ein sicheres Ein- und Ausfahrverhalten des Rastkolbens 4 erzielt.

Gemäß einer weiteren Ausführungsform konnte die Betätigung des Rastkolbens auch auf elektrischem oder pneumatischem Wege erfolgen.

## Patentansprüche

1. Spannvorrichtung für Endlostreibelemente, wie Ketten, Riemen etc. mit einem Spannkolben (3), der eine Rasteinrichtung (8, 9) aufweist und mit einem Rastkolben (4), der mit der Rasteinrichtung (8, 9) zum Arretieren oder Freigeben der Bewegung des Spannkolbens (3) in oder außer Eingriff bringbar ausgestaltet ist, wobei der Rastkolben (4) einen die Bewegung des Rastkolbens (4) in die Arretierstellung und in die Freigabestellung bewirkenden Betätigungsbereich (15) und einen davon getrennt angeordneten Rastbereich (30, 33) für den Eingriff mit der Rasteinrichtung (8, 9) des Spannkolbens (3) aufweist, **dadurch gekennzeichnet, dass** der Rastbereich (30, 33) des Rastkolbens (4) eine Ausgestaltung aufweist, die einen hydraulischen Kraftausgleich bewirkt.

2. Spannvorrichtung (1) nach Anspruch 1, **dadurch gekennzeichnet, dass** der Betätigungsbereich (15) des Rastkolbens (4) eine mit einem Betätigungsdruck einer Hydraulikflüssigkeit beaufschlagbare Kolbenfläche (17) aufweist, deren Betätigungsrichtung in die Freigabestellung des Rastkolbens (4) weist.

3. Spannvorrichtung (1) nach Anspruch 1 oder 2, **dadurch gekennzeichnet, dass** eine auf den Betätigungsbereich (15) des Rastkolbens (4) wirkende Federeinrichtung (22) vorgesehen ist, deren Wirkrichtung in die Arretierstellung des Rastkolbens (4) weist.

4. Spannvorrichtung (1) nach einem der Ansprüche 1 bis 3, **dadurch gekennzeichnet, dass** der Rastbereich als Rastöffnung (30) in einem sich von dem Betätigungsbereich (15) wegerstreckenden Raststößel (16) angeordnet ist, durch die sich die Rasteinrichtung (8, 9) des Spannkolbens (3) zumindest Bereichsweise erstreckt.

5. Spannvorrichtung (1) nach Anspruch 4, **dadurch gekennzeichnet, dass** die Rastöffnung (30) eine einseitig an der Innenfläche angeordnete Rastnase (33) für den Eingriff in die Rasteinrichtung (8, 9) des Spannkolbens (3) aufweist.

6. Spannvorrichtung (1) nach Anspruch 4 oder 5, **dadurch gekennzeichnet, dass** die Rasteinrichtung (8, 9) des Spannkolbens (3) eine sich durch die Rastöffnung (30) des Rastkolbens (4) erstreckende Raststange (8) mit einer Verzahnung (9) umfasst.

7. Spannvorrichtung (1) nach Anspruch 6, **dadurch gekennzeichnet, dass** die Raststange (8) einen kreisförmigen Grundquerschnitt aufweist, und die Rastöffnung (30) als ein an diesen Grundquerschnitt angepasstes Langloch ausgestaltet ist, wobei die Länge des Langloches mindestens dem Betätigungshub des Rastkolbens (4) zwischen Freigabestellung und Arretierstellung entspricht.

8. Spannvorrichtung (1) nach Anspruch 7, **dadurch gekennzeichnet, dass** die Rastöffnung (30) einseitig an der Innenfläche einen Hinterschnitt (31) aufweist, der in die Rastnase (33) übergeht.

9. Spannvorrichtung (1) nach einem der Ansprüche 6 bis 8, **dadurch gekennzeichnet, dass** der Spannkolben (3) in einem Gehäuse (2) geführt ist, zwischen dem Gehäuse (2) und den Spannkolben (3) eine Druckkammer ausgebildet ist, die Rasteinrichtung (8, 9) aus der Druckkammer herausgeführt ist und sich die Verzahnung (9) zumindest bei vollständig eingefahrenem Spannkolben (3) außerhalb der Druckkammer befindet.

10. Spannvorrichtung (1) nach einem der Ansprüche 1 bis 9, **dadurch gekennzeichnet, dass** der Rastkolben (4) in einem Gehäuse (2) getrennt von einer Druckkammer des Spannkolbens (3) geführt ist.

11. Spannvorrichtung (1) für einen Verbrennungsmotor mit Motorölkreislauf nach einem der Ansprüche 1 bis 10, **dadurch gekennzeichnet, dass** die Kolbenfläche (17) des Rastkolbens (4) von dem Hydraulikdruck des Motorölkreislaufes beaufschlagt ist.

## Claims

1. A tensioner for endless driving elements, such as chains, belts etc., comprising a tensioning piston (3) provided with locking means (8, 9), and a locking piston (4) which is implemented such that it is adapted to be engaged with and disengaged from said locking means (8, 9) so as to arrest or release the movement of said tensioning piston, (3), said locking piston (4) comprising an operating section (15) causing said locking piston (4) to move to the arresting position and to the release position, and a locking area (30, 33) used for engagement with said locking means (8, 9) of the tensioning piston (3) and arranged separately from said operating section (15), **characterized in that** the locking area (30, 33) of the locking piston (4) is designed such that a hydraulic force balance is caused.

2. A tensioner (1) according to claim 1, **characterized in that** the operating section (15) of the locking piston (4) is provided with a piston area (17) which is adapted to have applied thereto an operating pressure of a hydraulic fluid, the operating direction of said piston area (17) being directed towards the release position of the locking piston (4).

3. A tensioner (1) according to claim 1 or 2, **characterized in that** a spring means (22) is provided, which acts on the operating section (15) of the locking piston (4), said spring means (22) being effective in the direction of the arresting position of the locking piston (4).

4. A tensioner (1) according to one of the claims 1 to 3, **characterized in that** the locking area is provided in the form of a locking opening (30) in a locking plunger (16) which extends away from said operating section (15), at least a portion of the locking means (8, 9) of the tensioning piston (3) extending through said locking opening (30).

5. A tensioner (1) according to claim 4, **characterized in that** the locking opening (30) is provided with a locking projection (33), which is arranged on the inner surface of said locking opening (30) on one side thereof and which is used for engagement with the locking means (8, 9) of the tensioning piston (3).

6. A tensioner (1) according to claim 4 or 5, **characterized in that** the locking means (8, 9) of the tensioning piston (3) comprises a locking rod (8) provided with teeth (9) and extending through the locking opening (30) of the locking piston (4).

7. A tensioner (1) according to claim 6, **characterized in that** the locking rod (8) has a circular basic cross-section, and that the locking opening (30) is implemented as an elongated hole which is adapted to this basic cross-section, the length of said elongated hole corresponding at least to the operating stroke of the locking piston (4) between the release position and the arresting position.

8. A tensioner (1) according to claim 7, **characterized in that** the inner surface of the locking opening (30) is provided on one side thereof with an undercut portion (31) which merges with the locking projection (33).

9. A tensioner (1) according to one of the claims 6 to 8, **characterized in that** the tensioning piston (3) is guided in a housing (2), that a pressure chamber is formed between said housing (2) and said tensioning piston (3), that the locking means (8, 9) extend from the inner to the outer side of said pressure chamber, and that the teeth (9) are located outside of said pressure chamber, at least in the fully retracted position of the tensioning piston (3).

10. A tensioner (1) according to one of the claims 1 to 9, **characterized in that** the locking piston (4) is guided in a housing (2) such that it is separated from a pressure chamber of the tensioning piston (3).

11. A tensioner (1) for an internal combustion engine having an engine oil circuit according to one of the claims 1 to 10, **characterized in that** the piston area (17) of the locking piston (4) is acted upon by the hydraulic pressure of the engine oil circuit.

## Revendications

1. Dispositif tendeur pour des dispositifs d'entraînement sans fin tel que des chaînes, des courroies, etc., comportant un piston de serrage (3), qui comporte un dispositif d'encliquetage (8, 9), et un piston d'encliquetage (4), qui est agencé de manière à être amené en prise et hors de prise avec le dispositif d'encliquetage (8, 9) pour bloquer ou libérer le déplacement du piston de serrage (3), le piston d'encliquetage (4) possédant une zone d'actionnement (15) qui provoque le déplacement du piston d'encliquetage (4) dans la position de blocage et dans la position de libération, et une partie d'encliquetage (30, 33) disposée séparément de ce dernier pour la prise avec le dispositif d'encliquetage (8, 9) du piston de serrage (3), **caractérisé en ce que** la partie d'encliquetage (30, 33) du piston d'encliquetage (4) possède un agencement qui réalise une compensation hydraulique de force.

2. Dispositif tendeur (1) selon la revendication 1, **caractérisé en ce que** la zone d'actionnement (15) du piston d'encliquetage (4) comporte une surface de piston (17) pouvant être chargée par une pression d'actionnement d'un liquide hydraulique et dont la direction d'actionnement est tournée vers la position de libération du piston d'encliquetage (4).

3. Dispositif tendeur (1) selon la revendication 2, **caractérisé en ce qu'**il est prévu un dispositif à ressort (22), qui agit sur la zone d'actionnement (15) du piston d'encliquetage (4) et dont la direction d'action est orientée vers la position de blocage du piston d'encliquetage (4).

4. Dispositif tendeur (1) selon l'une des revendications 1 à 3, **caractérisé en ce que** la partie d'encliquetage est disposée en tant qu'ouverture d'encliquetage (30) dans un poussoir d'encliquetage (16), qui s'étend à partir de la zone d'actionnement (15) et à travers lequel s'étend, au moins par endroits, le dispositif d'encliquetage (8, 9) du piston de serrage (3).

5. Dispositif tendeur (1) selon la revendication 4, **caractérisé en ce que** l'ouverture d'encliquetage (30) possède un bec d'encliquetage (33), disposé d'un côté sur la surface intérieure, pour son engagement dans le dispositif d'encliquetage (8, 9) du piston de serrage (3).

6. Dispositif tendeur (1) selon la revendication 4 ou 5, **caractérisé en ce que** le dispositif d'encliquetage (8, 9) du piston de serrage (3) comprend une tige d'encliquetage (8) qui traverse l'ouverture d'encliquetage (30) du piston d'encliquetage (4) et comporte une denture (9).

7. Dispositif tendeur (1) selon la revendication 6, **caractérisé en ce que** la tige d'encliquetage (8) comporte une section transversale de base de forme circulaire et que l'ouverture d'encliquetage (30) est agencée sous la forme d'un trou allongé adapté à cette section transversale de base, la longueur du trou allongé correspondant au moins à une course d'actionnement du piston d'encliquetage (4) entre la position de libération et la position de blocage.

8. Dispositif tendeur (1) selon la revendication 7, **caractérisé en ce que** l'ouverture d'encliquetage (30) comporte d'un côté, sur la surface intérieure, une partie en dépouille (31), qui se prolonge par le bec d'encliquetage (33).

9. Dispositif tendeur (1) selon l'une des revendications 6 à 8, **caractérisé en ce que** le piston de serrage (3) est guidé dans un boîtier (2), qu'entre le boîtier (2) et le piston de serrage (3) est formée une chambre de pression, que le dispositif d'encliquetage (8, 9) ressort de la chambre de pression et que la denture (9) est située à l'extérieur de la chambre de pression, au moins lorsque le piston de serrage (3) est complètement rétracté.

10. Dispositif tendeur (1) selon l'une des revendications 1 à 9, **caractérisé en ce que** le piston d'encliquetage (4) est guidé dans un boîtier (2) séparément d'une chambre de pression du piston de serrage (3).

11. Dispositif tendeur (1) pour un moteur à combustion interne à circuit d'huile selon l'une des revendications 1 à 10, **caractérisé en ce que** la surface (17) du piston d'encliquetage (4) est chargée par la pression hydraulique du circuit d'huile du moteur.
